(19) Europäisches Patentamt
European Patent Office
Office européen des brevets

(11) **EP 4 675 233 A1**

(12) **EUROPÄISCHE PATENTANMELDUNG**

(43) Veröffentlichungstag:
**07.01.2026   Patentblatt 2026/02**

(51) Internationale Patentklassifikation (IPC):
**G01D 5/347** (2006.01)   **G01D 5/38** (2006.01)

(21) Anmeldenummer: **25176347.0**

(52) Gemeinsame Patentklassifikation (CPC):
**G01D 5/34707**; G01D 5/38

(22) Anmeldetag: **14.05.2025**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **05.07.2024   DE 102024002189**

(71) Anmelder: **Dr. Johannes Heidenhain GmbH
83301 Traunreut (DE)**

(72) Erfinder:
• **SPECKBACHER, Peter
  84558 Kirchweidach (DE)**
• **FUNK, Stefan
  83371 Stein an der Traun (DE)**

(54) **MASSVERKÖRPERUNG UND OPTISCHE POSITIONSMESSEINRICHTUNG MIT DIESER MASSVERKÖRPERUNG**

(57)     Eine Maßverkörperung für eine optische Positionsmesseinrichtung umfasst ein Trägersubstrat, eine auf dem Trägersubstrat angeordnete erste Reflektorschicht, eine auf der Reflektorschicht angeordnete transparente Abstandsschicht, eine auf der Abstandsschicht angeordnete strukturierte zweite Reflektorschicht, sowie eine auf der Maßverkörperungs-Oberseite über der zweiten Reflektorschicht angeordnete Schutzschicht mit einer definierten Dicke. Die Schutzschicht ist weiterhin auch auf den Maßverkörperungs-Seitenflächen angeordnet (Figur 1a).

## FIG. 1a

**Beschreibung**

## GEBIET DER TECHNIK

Die vorliegende Erfindung betrifft eine Maßverkörperung für eine optische Positionsmesseinrichtung, sowie eine optische Positionsmesseinrichtung mit einer solchen Maßverkörperung. Über die optische Abtastung einer derartigen Maßverkörperung mittels einer Abtasteinheit kann eine Verschiebung zwischen der Maßverkörperung und der Abtasteinheit bzw. die Relativposition von Maßverkörperung und Abtasteinheit erfasst werden.

## STAND DER TECHNIK

Optische Positionsmesseinrichtungen, die auf der optischen Abtastung von Maßverkörperungen basieren, werden zur hochgenauen Positionserfassung unter anderem auch in Anlagen zur Halbleiterfertigung eingesetzt. Zum Beispiel ist bekannt, die Position des Wafertischs relativ zur Abbildungsoptik in Lithographievorrichtungen mit Hilfe derartiger optischer Positionsmesseinrichtungen präzise zu bestimmen. Im Fall von EUV-Lithographievorrichtungen kann dabei eine Positionsbestimmung in Bereichen derartiger Vorrichtungen vorgesehen sein, in der hochenergetische elektromagnetische Strahlung verwendet wird. Dabei könnte es unter Umständen zu einer Beschädigung von Komponenten der Positionsmesseinrichtung durch die EUV-Strahlung kommen, insbesondere bei der verwendeten Maßverkörperung. Weiterhin könnte die Maßverkörperung auch durch die in derartigen Umgebungen vorhandenen freien Wasserstoff-Radikale beschädigt werden. Diese resultieren aufgrund der Wechselwirkung der EUV-Strahlung mit dem dort vorhandenen Wasserstoff-Gas, wie dies etwa in der Veröffentlichung M.v.d.Kerkhof et al., EUV-induced hydrogen plasma and particle release, Radiation Effects & Defects in Solids, 2022, Vol. 177, Nos. 5-6, p. 486 - 512 beschrieben ist. Ein unerwünschter Materialabtrag auf Seiten der verwendeten Maßverkörperungen hätte dann möglicherweise eine Kontamination der Spiegel-Optiken in der EUV-Lithographievorrichtung zur Folge.

Eine gattungsgemäße Maßverkörperung für eine optische Positionsmesseinrichtung ist aus der EP 1436647 B1 bekannt. Das dort in Figur 2 vorgeschlagene Reflexions-Phasengitter umfasst ein Trägersubstrat, auf dem eine erste Reflektorschicht aus Aluminium, eine transparente Abstandsschicht, eine strukturierte, zweite Reflektorschicht aus Chrom und eine darüber angeordnete Schutzschicht vorgesehen ist. Als Schutzschicht wird eine Sol-Gel-Schutzschicht oder alternativ eine Spin-on-Glas-Schicht vorgeschlagen. Weder über die Schutzschicht-Materialien noch über die vorgesehene Schutzschicht-Ausbildung ist im Fall der Verwendung in EUV-Lithographievorrichtungen zuverlässig sichergestellt, dass die Maßverkörperung hinreichend widerstandsfähig gegenüber Wasserstoff-Radikalen und EUV-Strahlung ist. Zudem werden diese Schichten zumeist mittels eines Spincoating-Prozesses aufgebracht. Die dadurch fertigungstechnisch bedingten Schwankungen der Dicke der Sol-Gel-Schicht oder der Spin-on-Glass-Schicht beeinträchtigen zudem die erzielbaren Beugungseffizienzen, die für hochgenaue Messsysteme benötigt werden.

## ZUSAMMENFASSUNG DER ERFINDUNG

Aufgabe der Erfindung ist es, die aus dem Stand der Technik bekannte Maßverkörperung bzw. eine damit ausgestattete Positionsmesseinrichtung hinsichtlich ihrer Stabilität gegenüber hochenergetischer elektromagnetischer Strahlung weiter zu verbessern.

Diese Aufgabe wird gelöst durch eine Maßverkörperung gemäß Anspruch 1 bzw. durch eine Positionsmesseinrichtung gemäß Anspruch 9. Vorteilhafte Details ergeben sich jeweils aus den abhängigen Ansprüchen.

Die erfindungsgemäße Maßverkörperung für eine optische Positionsmesseinrichtung umfasst ein Trägersubstrat, eine auf dem Trägersubstrat angeordnete erste Reflektorschicht, eine auf der Reflektorschicht angeordnete transparente Abstandsschicht, eine auf der Abstandsschicht angeordnete strukturierte zweite Reflektorschicht, sowie eine auf der Maßverkörperungs-Oberseite über der zweiten Reflektorschicht angeordnete Schutzschicht mit einer definierten Dicke. Die Schutzschicht ist weiterhin auch auf den Maßverkörperungs-Seitenflächen angeordnet.

Vorzugsweise ist die Dicke der Schutzschicht auf den Maßverkörperungs-Seitenflächen um einen Faktor 5 - 10 kleiner als die Dicke der Schutzschicht auf der Maßverkörperungs-Oberseite gewählt.

Es ist möglich, dass,

- dass die Dicke der Schutzschicht auf den Maßverkörperungs-Seitenflächen 30nm +/- 10% und die Dicke der Schutzschicht auf der Maßverkörperungs-Oberseite 210nm +/- 2% beträgt, oder

- dass die Dicke der Schutzschicht auf den Maßverkörperungs-Seitenflächen 60nm +/- 10% und die Dicke der Schutzschicht auf der Maßverkörperungs-Oberseite 420nm +/- 2% beträgt.

Mit Vorteil ist vorgesehen, dass die Schutzschicht aus einem Material besteht, das einen Material-Abtrag im Trägersubstrat und/oder in den Reflektorschichten und/oder in der Abstandsschicht verhindert, der durch Wasserstoff-Radikale verursacht ist.

Die Schutzschicht kann dabei aus einem der folgenden Materialien bestehen:

- Titanoxid ($TiO_x$, x = 2 - 4)

- Rutheniumoxid ($RuO_2$)

- Chromoxid ($Cr_2O_3$)

- Vanadiumoxid ($V_2O_5$)

- Nioboxid ($Nb_2O_5$)

In einer möglichen Ausführungsform besteht die erste Reflektorschicht aus Aluminium, die Abstandsschicht aus Siliziumoxid oder Titanoxid und die zweite Reflektorschicht aus Chrom.

Weiterhin kann vorgesehen sein, dass

- die erste Reflektorschicht eine Schichtdicke im Bereich [20nm - 120nm] aufweist,

- die Abstandsschicht eine Schichtdicke im Bereich [130nm - 170nm] aufweist, und

- die zweite Reflektorschicht eine Schichtdicke im Bereich [20nm - 50nm] aufweist.

Vorzugsweise ist die freiliegende Unterseite des Trägersubstrats nicht mit der Schutzschicht bedeckt.

Eine optische Positionsmesseinrichtung weist eine erfindungsgemäße Maßverkörperung sowie eine relativ hierzu bewegliche Abtasteinheit auf, wobei die Abtasteinheit zur optischen Abtastung der Maßverkörperung mit Licht einer definierten Wellenlänge ausgebildet ist.

Mit Vorteil umfasst die Abtasteinheit hierbei eine Lichtquelle, die Licht mit einer Wellenlänge von 976nm emittiert.

Es erweist sich als günstig, wenn die Dicke der Schutzschicht auf der Maßverkörperungs-Oberseite derart gewählt ist, dass die Intensität der von der Maßverkörperung in die +/- 1.Ordnung gebeugten Strahlenbündel mindestens 25 % der Intensität der einfallenden Strahlenbündel beträgt.

Es kann vorgesehen werden, dass die Dicke ($d_{OS}$) der Schutzschicht auf der Maßverkörperungs-Oberseite bei senkrechtem Einfall des Lichts gemäß

$$d_{OS} = m \cdot (\lambda/2n) +/- 2\%$$

gewählt ist, mit

$d_{OS}$ := Dicke der Schutzschicht auf Maßverkörperungs-Oberseite

m := 1, 2, 3, 4

$\lambda$ := Wellenlänge des zur Abtastung verwendeten Lichts

n := Brechungsindex der Schutzschicht

Als Vorteil der erfindungsgemäßen Maßverkörperung resultiert ein effizienter Schutz gegenüber EUV-Strahlung und Wasserstoff-Radikalen. Eine Beschädigung bzw. Degradation von Schichten des Maßverkörperungsaufbaus kann zuverlässig vermieden werden. Weiterhin ist sichergestellt, dass auch in derartigen Umgebungen kein Materialabtrag auf Seiten der Maßverkörperung resultiert, der empfindliche andere Komponenten beeinträchtigen könnte, beispielsweise die Spiegel in EUV-Lithographievorrichtungen. Gleichzeitig ist eine hohe Beugungseffizienz der Maßverkörperung gewährleistet, d.h. die optische Abtastung zur Erzeugung hochgenauer positionsabhängiger Abtastsignale wird durch die erfindungsgemäßen Maßnahmen nicht beeinträchtigt.

Im Fall der Verwendung von Titanoxid $TiO_2$ als Schutzschicht-Material kann dieses mit Hilfe eines Sputterverfahrens aufgebracht werden. Dieses Verfahren ermöglicht die Beschichtung der Oberseite und der Seitenflächen der erfindungsgemäßen Maßverkörperung in einem einzigen Arbeitsschritt. Weiterhin erlaubt das Sputterverfahren eine extrem genaue Einstellung der Dicke der Schutzschicht, die im Bereich der Ziel-Schutzschichtdicken bei etwa +/- 3% liegt.

Weitere Vorteile und Einzelheiten der vorliegenden Erfindung ergeben sich aus der nachfolgenden Beschreibung eines Ausführungsbeispiels anhand der Figuren.

**KURZE BESCHREIBUNG DER ZEICHNUNGEN**

Dabei zeigt

Figur 1a    eine stark schematisiere Darstellung einer optischen Positionsmesseinrichtung mit der erfindungsgemäßen Maßverkörperung in einer ersten Schnittansicht;

Figur 1b    eine stark schematisierte Darstellung einer optischen Positionsmesseinrichtung mit der erfindungsgemäßen Maßverkörperung in einer zweiten Schnittansicht;

Figur 2    eine Darstellung mit einer Simulation der Abhängigkeit der Beugungseffizienz von der Schutzschichtdicke in einem Ausführungsbeispiel der erfindungsgemäßen Maßverkörperung.

**BESCHREIBUNG DER AUSFÜHRUNGSFORMEN**

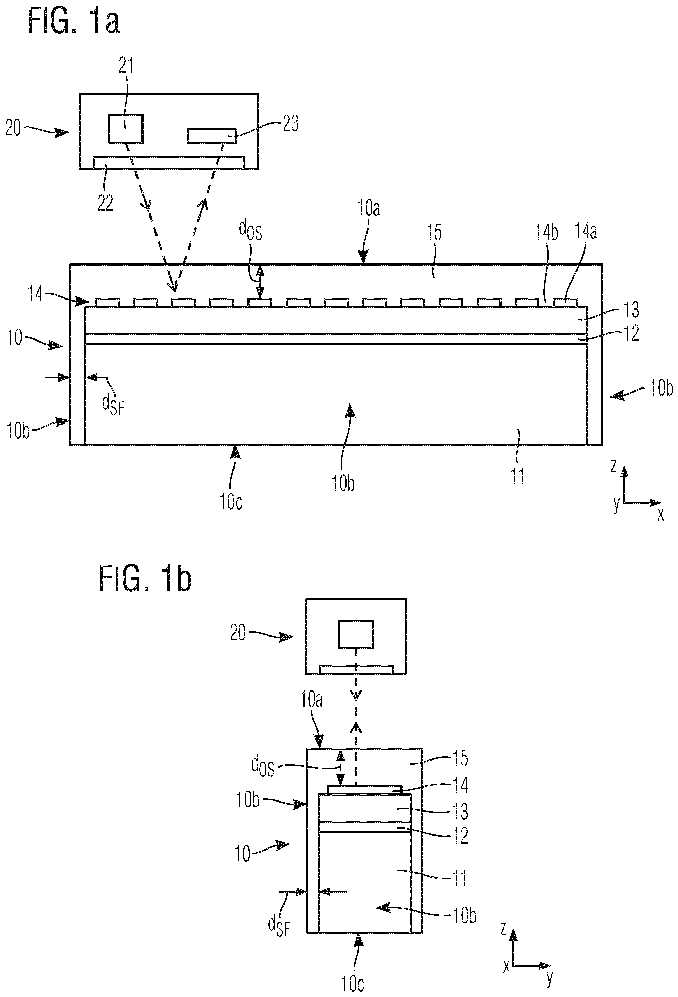

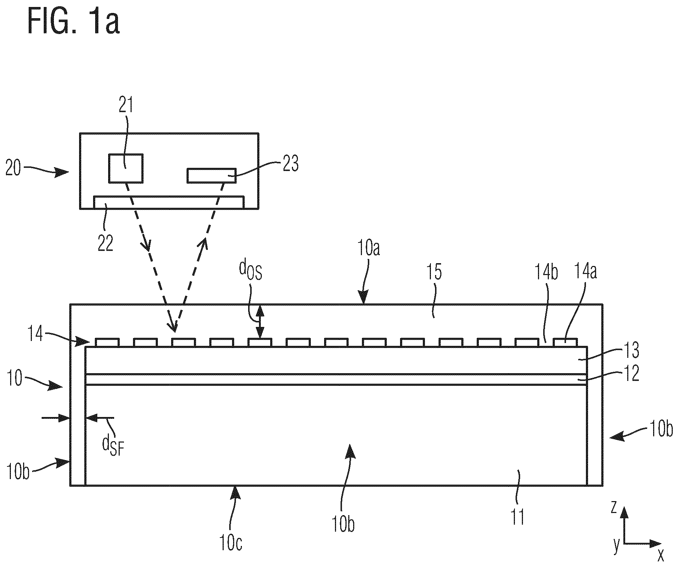

Anhand der Schnittansichten in den stark schematisierten Figuren 1a und 1b wird nachfolgend eine optische Positionsmesseinrichtung erläutert, in der eine erfindungsgemäß ausgestaltete Maßverkörperung zum Einsatz kommt.

Im dargestellten Ausführungsbeispiel ist die Positionsmesseinrichtung als Längenmesssystem ausgebildet und umfasst neben der Maßverkörperung 10 eine Abtasteinheit 20. Die Maßverkörperung 10 und die Abtasteinheit 20 sind dabei relativ zueinander entlang der Messrichtung x beweglich. Mit der Maßverkörperung 10 und der Abtasteinheit 20 können beispielsweise Maschinenkomponenten verbunden sein, die zueinander entlang der Messrichtung x verschiebbar sind und deren Relativposition mit Hilfe der Positionsmesseinrichtung erfassbar ist. Von der Positionsmesseinrichtung erzeugte positionsabhängige Abtastsignale werden von einer - nicht dargestellten - Steuereinheit zur Bewegungssteuerung der Maschinenkomponenten verwendet.

Die nachfolgend noch im Detail zu beschreibende Maßverkörperung kann selbstverständlich nicht nur in Positionsmesseinrichtungen zum Einsatz kommen, die als Längenmesssystem ausgebildet sind. Weiterhin ist es möglich, auch Maßverkörperungen für rotatorische Positionsmesseinrichtungen derart auszubilden, die eine Rotationsbewegung zweier zueinander beweglicher Objekte um eine Rotationsachse erfassen. Ebenso können auch zwei- oder mehrdimensionale Positionsmesseinrichtungen mit erfindungsgemäßen Maßverkörperungen ausgestattet werden, die eine Positionsmessung entlang mehrerer linearer und/oder rotatorischer Messrichtungen ermöglichen usw..

Zur optischen Abtastung der Maßverkörperung 10 und zur Erzeugung der Abtastsignale umfasst die Abtasteinheit 20 eine Lichtquelle 21, die Licht einer definierten Wellenlänge λ emittiert; in einem bevorzugten Ausführungsbeispiel wird eine Lichtquelle 21 verwendet, die Licht mit einer Wellenlänge λ = 976nm abstrahlt. Die von der Lichtquelle 21 erzeugten Strahlenbündel durchlaufen ein erstes Mal ein Abtastgitter 22 in der Abtasteinheit 20, beaufschlagen dann die Maßverkörperung 10 und treten anschließend ein zweites Mal durch das Abtastgitter 22, bevor sie auf eine Detektoranordnung 23 in der Abtasteinheit 20 treffen. In den Figuren ist lediglich ein stark schematisierter, vereinfachter Abtaststrahlengang dargestellt, da die jeweilige optische Abtastung nicht wesentlich für die vorliegende Erfindung ist. Selbstverständlich können hier unterschiedlichste optische Abtastprinzipien zum Einsatz kommen. Details eines geeigneten optischen Abtastprinzips können beispielsweise der EP 1762828 A2 entnommen werden.

Die abgetastete, erfindungsgemäße Maßverkörperung 10 weist ein Trägersubstrat 11 auf, das vorzugsweise aus einem Material mit einem besonders kleinen thermischen Ausdehnungskoeffizienten besteht. Geeignet hierfür ist z.B. eine Glaskeramik, die unter der Bezeichnung Zerodur erhältlich ist. Grundsätzlich können aber auch andere Materialien mit kleinem thermischem Ausdehnungskoeffizienten für das Trägersubstrat 11 verwendet werden, z.B. die Glaskeramik Clearceram, Borofloat-Glas oder Quarz-Glas. Eine übliche Dicke des Trägersubstrats 11 liegt dabei im Bereich [5mm - 20mm].

Auf dem Trägersubstrat 11 ist eine erste Reflektorschicht 12 angeordnet bzw. aufgebracht, wobei im vorliegenden Beispiel eine ganzflächige Beschichtung des Trägersubstrats 11 mit der ersten Reflektorschicht 12 vorgesehen ist. Als Material der ersten Reflektorschicht 12 eignet sich Aluminium, das mit einer Schichtdicke im Bereich [20nm - 120nm] aufgedampft wird.

Über bzw. auf der ersten Reflektorschicht 12 ist eine transparente Abstandsschicht 13 angeordnet, wobei wie aus den Figuren 1a und 1b ersichtlich im dargestellten Ausführungsbeispiel eine ganzflächige Anordnung der Abstandsschicht 13 auf der ersten Reflektorschicht 12 vorgesehen ist. Als Material der Abstandsschicht 13 ist vorliegend Siliziumoxid (SiOx) mit einem Brechungsindex n = 1,46 vorgesehen, das in einer Schichtdicke im Bereich [120nm - 170nm] aufgebracht ist. Als alternatives Material könnte für die Abstandsschicht auch Titanoxid (TiOx) verwendet werden.

Über der Abstandsschicht 13 ist eine strukturierte zweite Reflektorschicht 14 angeordnet. Diese besteht aus in Messrichtung x alternierend angeordneten Teilbereichen 14a, 14b unterschiedlicher optischer Durchlässigkeit, wobei vorliegend opake Teilbereiche 14a aus Chrom und vollständig durchlässige Teilbereiche 14b vorgesehen sind. Die Teilbereiche 14a, 14b bilden die Messteilung der erfindungsgemäßen Maßverkörperung 10 und bestehen im Fall einer inkrementellen Messteilung aus periodisch entlang der Messrichtung x angeordneten, strichförmigen Teilbereichen 14a, 14b, deren Längserstreckungsrichtung senkrecht zur Messrichtung x orientiert ist, also entlang der in den Figuren angegebenen y-Richtung. Zur Herstellung der strukturierten zweiten Reflektorschicht 14 wird zunächst ganzflächig das Material der opaken Teilbereiche 14a, also Chrom, abgeschieden und anschließend über einen geeigneten Lithographie-Prozess in den durchlässigen Teilbereichen 14b wieder entfernt. Die Schichtdicke der zweiten Reflektorschicht 14 wird vorzugsweise im Bereich [20nm - 50nm] gewählt.

Über der zweiten Reflektorschicht 14 ist auf der Maßverkörperungs-Oberseite 10a eine Schutzschicht 15 aufgebracht; weiterhin ist die Schutzschicht 15 erfindungsgemäß auch auf den Maßverkörperungs-Seitenflächen 10b angeordnet. Als Maßverkörperungs-Oberseite 10a sei hierbei diejenige Seite der Maßverkörperung 10 zu verstehen, die der Abtasteinheit zugewandt ist bzw. die Seite mit der zweiten strukturierten Reflektorschicht 14. Nicht mit der Schutzschicht 15 bedeckt ist auf Seiten der Maßverkörperung 10 lediglich die freiliegende Unterseite 10c des Trägersubstrats 11. Über die Unterseite 10c wird die Maßverkörperung 10 in der Regel mittels eines geeigneten Befestigungsverfahrens wie z.B. Kleben oder optischem Ansprengen auf einem - nicht dargestellten - Träger montiert, der wiederum an einer Maschinenkomponente angeordnet ist.

Auf diese Art und Weise ist der Teil der Maßverkörperung 10, der der jeweiligen Mess-Umgebung ausgesetzt ist, also die Maßverkörperungs-Oberseite 10a sowie die Maßverkörperungs-Seitenflächen 10b, zuverlässig gegen äußere Einflüsse wie z.B. hochenergetische Strahlung und/oder Wasserstoff-Radikale geschützt. Die nicht mit der Schutzschicht 15 bedeckte Unterseite 10c des Trägersubstrats 11 ist aufgrund der erwähnten Montage auf einem Träger diesen Einflüssen üblicherweise nicht ausgesetzt und bedarf von daher keiner weiteren Schutzmaßnahmen.

Als besonders vorteilhaftes Material für die Schutzschicht 15 ist Titanoxid $TiO_x$, x = 2 - 4 geeignet; weitere, grundsätzlich geeignete Materialien für die Schutzschicht wären z.B. Rutheniumoxid $RuO_2$ Chromoxid $Cr_2O_3$, Vanadiumoxid $V_2O_5$ oder Nioboxid $Nb_2O_5$. Generell sollte die Schutzschicht 15 aus einem Material bestehen, das einen Material-Abtrag im Trägersubstrat 11 und/oder in den Reflektorschichten 12, 14 und/oder in der Abstandsschicht 13 verhindert, der durch Wasserstoff-Radikale verursacht ist.

Das jeweilige Schutzschicht-Material wird vorzugsweise über ein Sputterverfahren auf der Maßverkörperungs-Oberseite 10a und den Maßverkörperungs-Seitenflächen 10b aufgebracht. Hierbei wird in einer Sputter-Anlage die Maßverkörperung 10 flächig mit der zweiten strukturierten Reflektorschicht 14 gegenüber dem Sputter-Target aufgelegt. Auf diese Art und Weise wird zum einen verhindert, dass auch die Unterseite 10c des Trägersubstrats 11 ungewollt mit dem Schutzschicht-Material beschichtet wird. Zum anderen resultiert in einer solchen Anordnung eine gerichtete (isotrope) Beschichtung der Maßverkörperungs-Oberseite 10a und eine ungerichtete (anisotrope) Beschichtung der Maßverkörperungs-Seitenflächen 10b. Durch die geeignete Wahl der Sputter-Parameter können auf diese Art und Weise unterschiedliche Abscheideraten des Schutzschicht-Materials auf der Maßverkörperungs-Oberseite 10a und den Maßverkörperungs-Seitenflächen 10b eingestellt werden, respektive unterschiedliche Dicken $d_{OS}$, $d_{SF}$ der Schutzschicht 15 auf der Maßverkörperungs-Oberseite 10a und den Maßverkörperungs-Seitenflächen 10b. Vorzugsweise erfolgt dies derart, dass die Dicke $d_{SF}$ der Schutzschicht 15 auf den Maßverkörperungs-Seitenflächen um einen Faktor 5 - 10 kleiner ist als die Dicke $d_{OS}$ der Schutzschicht auf der Maßverkörperungs-Oberfläche 10a. Es sei an dieser Stelle darauf hingewiesen, dass die Darstellung der Schutzschicht-Dicken $d_{SF}$, $d_{OS}$ in den Figuren 1a, 1b nicht maßstäblich korrekt gemäß der vorstehenden Dimensionierungsregel wiedergegeben ist, sondern nur stark schematisiert angedeutet ist.

Zu beachten ist bei der Dimensionierung der Schutzschicht-Dicke $d_{OS}$ auf der Maßverkörperungs-Oberseite 10a, also oberhalb der zweiten strukturierten Reflektorschicht 14, dass darüber die Intensität der von der Maßverkörperung 10 in die +/- 1.Ordnung gebeugten Strahlenbündel nur insoweit beeinträchtigt wird, dass diese mindestens 25 % der Intensität der einfallenden Strahlenbündel beträgt; andernfalls würde die optische Abtastung der Maßverkörperung 10 und damit die Erzeugung der hochgenauen positionsabhängigen Abtastsignale negativ beeinflusst. Die Dicken-Dimensionierung erfolgt in der erfindungsgemäßen Maßverkörperung daher dergestalt, dass die Dicke $d_{OS}$ der Schutzschicht 15 auf der Maßverkörperungs-Oberseite 10a bei senkrechtem Einfall des Lichts gemäß der Beziehung

$$d_{OS} = m \cdot (\lambda/2n) \; +/- \; 2\%$$

gewählt wird, mit

$d_{OS}$ := Dicke der Schutzschicht auf Maßverkörperungs-Oberseite

m := 1, 2, 3, 4

$\lambda$ := Wellenlänge des zur Abtastung verwendeten Lichts

n := Brechungsindex der Schutzschicht 15

Über eine Wahl der Schichtdicke $d_{OS}$ auf der Maßverkörperungs-Oberseite 10a gemäß der vorstehenden Bedingung bleibt gewährleistet, dass die für die optische Abtastung erforderliche Phasengitterwirkung der erfindungsgemäßen Maßverkörperung 10 nicht bzw. nur geringfügig gestört wird.

Die Wahl des Parameters m im angegebenen Bereich 1 - 4 erweist sich deshalb als vorteilhaft, da bei größeren Werten für m und damit noch größeren Dicken $d_{OS}$ der Schutzschicht 15 auf der Maßverkörperungs-Oberseite 10a die Streuung der reflektierten Teilstrahlenbündel an Fehlstellen in der Schutzschicht 15 zunehmen würde. Solche Fehlstellen streuen das zur Abtastung eingesetzte Licht und können damit die benötigte Genauigkeit der Positionsmesseinrichtung herabsetzen. Weiterhin könnte es bei zu großen Schichtdicken $d_{OS}$ im Bereich $d_{OS}$ > 1 $\mu$m auch zu einem Abplatzen der Schutzschicht 15 kommen, wenn Spannungen zwischen der Schutzschicht 15 und den anderen Maßverkörperungs-Materialien nicht mehr relaxiert werden können.

Bei einer genutzten Wellenlänge $\lambda$ = 976nm ergeben sich für m = 1 oder m = 2 und der Verwendung des Schutzschicht-Materials Titanoxid mit einem Brechungsindex n = 2.3 die Schichtdicken $d_{OS}$ = 210nm +/- 2% (m = 1) und $d_{OS}$ = 420nm +/- 2% (m = 2) auf der Maßverkörperungs-Oberseite 10a als geeignete Dimensionierungs-Parameter. Gemäß der oben angegebenen Dimensionierungsregel für die Dicken $d_{SF}$ der Schutzschicht 15 auf den Maßverkörperungs-Seitenflächen 10b könnte die Dicke $d_{SF}$ der Schutzschicht 15 auf den Maßverkörperungs-Seitenflächen 10b dann $d_{SF}$ = 30nm +/- 10% (m = 1) bzw. $d_{SF}$ = 60nm +/- 10% (m = 2) gewählt werden.

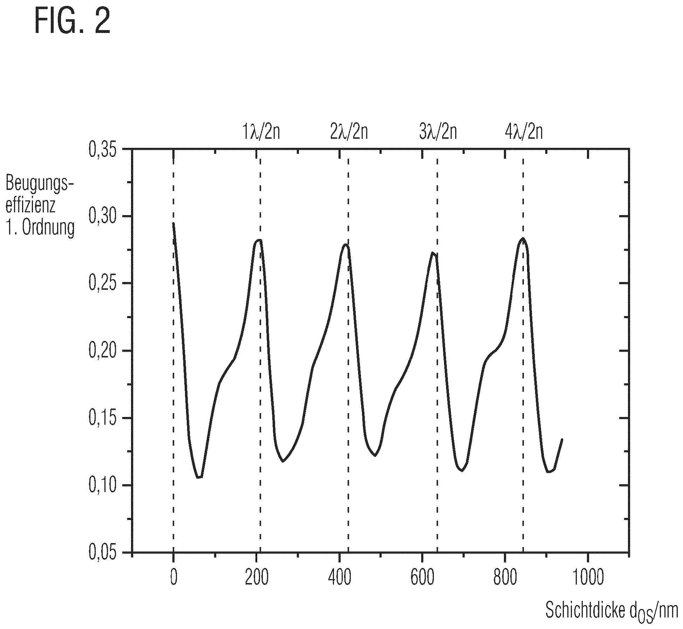

In Figur 2 ist eine Darstellung einer Simulation der resultierenden Beugungseffizienz +/- 1. Ordnung einer erfindungsgemäßen Maßverkörperung in Abhängigkeit der Schichtdicke $d_{OS}$ auf der Maßverkörperungs-Oberseite gezeigt, wobei die Maßverkörperung mit senkrecht zu den strichförmigen Teilbereichen der Messteilung polarisiertem Licht der Wellenlänge $\lambda$ = 976nm beleuchtet wird. Für die Parameter m = 1 und m = 2 zeigt sich bei den Schichtdicken $d_{OS}$ = 210nm (m = 1) und $d_{OS}$ = 420nm (m = 2) unter Einbeziehung der oben genannten Toleranzen für $d_{OS}$ eine hinreichende Beugungseffizienz im Bereich von mehr als 25%. Dieses Verhalten gilt analog für parallel zu den strichförmigen Teilbereichen der Messteilung polarisierte Strahlung mit einer Wellenlänge $\lambda$ = 976 nm.

Neben dem erläuterten Ausführungsbeispiel gibt es selbstverständlich noch alternative weitere Ausführungsmöglichkeiten der vorliegenden Erfindung.

**Patentansprüche**

1. Maßverkörperung für eine optische Positionsmesseinrichtung mit

   - einem Trägersubstrat,
   - einer auf dem Trägersubstrat angeordneten ersten Reflektorschicht,
   - einer auf der ersten Reflektorschicht angeordneten transparenten Abstandsschicht,
   - einer auf der Abstandsschicht angeordneten, strukturierten zweiten Reflektorschicht mit Teilbereichen unterschiedlicher optischer Durchlässigkeit, sowie
   - einer auf der Maßverkörperungs-Oberseite über der zweiten Reflektorschicht angeordneten Schutzschicht mit einer definierten Dicke ($d_{OS}$),

   **dadurch gekennzeichnet,**
   **dass** die Schutzschicht (15) weiterhin auch auf den Maßverkörperungs-Seitenflächen (10b) angeordnet ist.

2. Maßverkörperung nach mindestens einem der vorhergehenden Ansprüche, **dadurch gekennzeichnet, dass** die Dicke ($d_{SF}$) der Schutzschicht (15) auf den Maßverkörperungs-Seitenflächen (10b) um einen Faktor 5 - 10 kleiner als die Dicke ($d_{OS}$) der Schutzschicht (15) auf der Maßverkörperungs-Oberseite (10a) gewählt ist.

3. Maßverkörperung nach Anspruch 2, **dadurch gekennzeichnet,**

   - **dass** die Dicke ($d_{SF}$) der Schutzschicht (15) auf den Maßverkörperungs-Seitenflächen (10b) 30nm +/- 10% und die Dicke ($d_{OS}$) der Schutzschicht (15) auf der Maßverkörperungs-Oberseite (10a) 210nm +/- 2% beträgt, oder
   - **dass** die Dicke ($d_{SF}$) der Schutzschicht (15) auf den Maßverkörperungs-Seitenflächen (10b) 60nm +/- 10% und die Dicke ($d_{os}$) der Schutzschicht (15) auf der Maßverkörperungs-Oberseite (10a) 420nm +/- 2% beträgt.

4. Maßverkörperung nach mindestens einem der vorhergehenden Ansprüche, **dadurch gekennzeichnet, dass** die Schutzschicht (15) aus einem Material besteht, das einen Material-Abtrag im Trägersubstrat (11) und/oder in den Reflektorschichten (12, 14) und/oder in der Abstandsschicht (13) verhindert, der durch Wasserstoff-Radikale verursacht ist.

5. Maßverkörperung nach mindestens einem der vorhergehenden Ansprüche, **dadurch gekennzeichnet, dass** die Schutzschicht (15) aus einem der folgenden Materialien besteht:

   - Titanoxid ($TiO_x$, x = 2 - 4)
   - Rutheniumoxid ($RuO_2$)
   - Chromoxid ($Cr_2O_3$)
   - Vanadiumoxid ($V_2O_5$)
   - Nioboxid ($Nb_2O_5$)

6. Maßverkörperung nach mindestens einem der vorhergehenden Ansprüche, **dadurch gekennzeichnet, dass** die erste Reflektorschicht (12) aus Aluminium, die Abstandsschicht (13) aus Siliziumoxid oder Titanoxid und die zweite Reflektorschicht (14) aus Chrom besteht.

7. Maßverkörperung nach mindestens einem der vorhergehenden Ansprüche, **dadurch gekennzeichnet, dass**

   - die erste Reflektorschicht (12) eine Schichtdicke im Bereich [20nm - 120nm] aufweist,
   - die Abstandsschicht (13) eine Schichtdicke im Bereich [130nm - 170nm] aufweist, und
   - die zweite Reflektorschicht (14) eine Schichtdicke im Bereich [20nm - 50nm] aufweist.

8. Maßverkörperung nach mindestens einem der vorhergehenden Ansprüche, **dadurch gekennzeichnet, dass** die freiliegende Unterseite (10c) des Trägersubstrats (11) nicht mit der Schutzschicht (15) bedeckt ist.

9. Optische Positionsmesseinrichtung, **gekennzeichnet durch** eine Maßverkörperung (10) nach einem der vorhergehenden Ansprüche sowie einer relativ hierzu beweglichen Abtasteinheit (20), wobei die Abtasteinheit (20) zur optischen Abtastung der Maßverkörperung (10) mit Licht einer definierten Wellenlänge ($\lambda$) ausgebildet ist.

10. Optische Positionsmesseinrichtung nach Anspruch 9, **dadurch gekennzeichnet, dass** die Abtasteinheit (20) eine Lichtquelle (11) umfasst, die Licht mit einer Wellenlänge ($\lambda$) von 976nm emittiert.

11. Optische Positionsmesseinrichtung nach Anspruch 9, **dadurch gekennzeichnet, dass** die Dicke ($d_{OS}$) der Schutzschicht (15) auf der Maßverkörperungs-Oberseite (10a) derart gewählt ist, dass die Intensität der von der Maßverkörperung (10) in die +/- 1.Ordnung gebeugten Strahlenbündel mindestens 25 % der Intensität der einfallenden Strahlenbündel beträgt.

12. Optische Positionsmesseinrichtung nach Anspruch 9 oder 11, **dadurch gekennzeichnet, dass** die Dicke ($d_{OS}$) der Schutzschicht (15) auf der Maßverkörperungs-Oberseite (10a) bei senkrechtem Einfall des Lichts gemäß

$$d_{OS} = m \cdot (\lambda/2n) \; +/- \; 2\%$$

gewählt ist, mit

$d_{OS}$ := Dicke der Schutzschicht auf Maßverkörperungs-Oberseite
m := 1, 2, 3, 4
$\lambda$ := Wellenlänge des zur Abtastung verwendeten Lichts
n := Brechungsindex der Schutzschicht

## FIG. 1a

## FIG. 1b

FIG. 2

FIG. 1a

Europäisches
Patentamt

European
Patent Office

Office européen
des brevets

# EUROPÄISCHER RECHERCHENBERICHT

Nummer der Anmeldung

EP 25 17 6347

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 436 647 B1 (HEIDENHAIN GMBH DR JOHANNES [DE]) 21. Januar 2009 (2009-01-21) * Abbildungen 1, 2 * * Absätze [0022] - [0026], [0029], [0032], [0033] * ----- | 1-12 | INV. G01D5/347 G01D5/38 |
| Y | DE 10 2007 053601 A1 (VOGT ELECT COMPONENTS GMBH [DE]) 20. Mai 2009 (2009-05-20) * Abbildungen 1, 2 * * Absätze [0002], [0016] - [0020], [0048] - [0053] * ----- | 1-12 | |
| Y | DE 10 2018 009722 A1 (MITUTOYO CORP [JP]) 4. Juli 2019 (2019-07-04) * Abbildungen 1, 2 * ----- | 1-12 | |
| A | WO 2013/100061 A1 (NIKON CORP [JP]) 4. Juli 2013 (2013-07-04) * Abbildungen 6, 7 * ----- | 1-12 | RECHERCHIERTE SACHGEBIETE (IPC) |
| A | JP 2010 271174 A (NIKON CORP) 2. Dezember 2010 (2010-12-02) * Abbildung 1 * ----- | 1-12 | G01D G02B |
| A | US 2023/126475 A1 (NAKAZAWA SHINSUKE [JP] ET AL) 27. April 2023 (2023-04-27) * Abbildung 2 * ----- | 1-12 | |
| A | US 5 377 044 A (TOMONO HARUO [JP] ET AL) 27. Dezember 1994 (1994-12-27) * Abbildungen 1, 2, 8 * ----- | 1-12 | |
| A | DE 10 2016 201068 A1 (HEIDENHAIN GMBH DR JOHANNES [DE]) 27. Juli 2017 (2017-07-27) * Abbildungen 5A, 5B * ----- | 1-12 | |

Der vorliegende Recherchenbericht wurde für alle Patentansprüche erstellt

| Recherchenort | Abschlußdatum der Recherche | Prüfer |
|---|---|---|
| München | 28. Oktober 2025 | Kuchenbecker, J |

EPO FORM 1503 03.82 (P04C03)

# EP 4 675 233 A1

## ANHANG ZUM EUROPÄISCHEN RECHERCHENBERICHT
## ÜBER DIE EUROPÄISCHE PATENTANMELDUNG NR.

EP 25 17 6347

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2025

| Im Recherchenbericht angeführtes Patentdokument | Datum der Veröffentlichung | Mitglied(er) der Patentfamilie | Datum der Veröffentlichung |
|---|---|---|---|
| EP 1436647 B1 | 21-01-2009 | AT E421707 T1 | 15-02-2009 |
| | | DE 10150099 A1 | 17-04-2003 |
| | | EP 1436647 A2 | 14-07-2004 |
| | | US 2005052743 A1 | 10-03-2005 |
| | | WO 03034105 A2 | 24-04-2003 |
| DE 102007053601 A1 | 20-05-2009 | CN 101842665 A | 22-09-2010 |
| | | DE 102007053601 A1 | 20-05-2009 |
| | | EP 2208027 A2 | 21-07-2010 |
| | | JP 5322315 B2 | 23-10-2013 |
| | | JP 2011503558 A | 27-01-2011 |
| | | RU 2010112586 A | 20-12-2011 |
| | | US 2010301843 A1 | 02-12-2010 |
| | | WO 2009059656 A2 | 14-05-2009 |
| DE 102018009722 A1 | 04-07-2019 | CN 110030894 A | 19-07-2019 |
| | | DE 102018009722 A1 | 04-07-2019 |
| | | JP 2019120500 A | 22-07-2019 |
| | | US 2019204119 A1 | 04-07-2019 |
| WO 2013100061 A1 | 04-07-2013 | CN 104094087 A | 08-10-2014 |
| | | JP 6086070 B2 | 01-03-2017 |
| | | JP 6319374 B2 | 09-05-2018 |
| | | JP 2016183983 A | 20-10-2016 |
| | | JP WO2013100061 A1 | 11-05-2015 |
| | | US 2015160041 A1 | 11-06-2015 |
| | | US 2017176216 A1 | 22-06-2017 |
| | | WO 2013100061 A1 | 04-07-2013 |
| JP 2010271174 A | 02-12-2010 | KEINE | |
| US 2023126475 A1 | 27-04-2023 | CN 114450553 A | 06-05-2022 |
| | | CN 114674233 A | 28-06-2022 |
| | | EP 4130683 A1 | 08-02-2023 |
| | | JP 7574845 B2 | 29-10-2024 |
| | | JP 2025011275 A | 23-01-2025 |
| | | JP WO2021201024 A1 | 07-10-2021 |
| | | TW 202142837 A | 16-11-2021 |
| | | TW 202332884 A | 16-08-2023 |
| | | TW 202447177 A | 01-12-2024 |
| | | US 2023126475 A1 | 27-04-2023 |
| | | US 2024393143 A1 | 28-11-2024 |
| | | US 2025116537 A1 | 10-04-2025 |
| | | WO 2021201024 A1 | 07-10-2021 |
| US 5377044 A | 27-12-1994 | JP H04211202 A | 03-08-1992 |

EPO FORM P0461

Für nähere Einzelheiten zu diesem Anhang : siehe Amtsblatt des Europäischen Patentamts, Nr.12/82

Seite 1 von 2

## ANHANG ZUM EUROPÄISCHEN RECHERCHENBERICHT
## ÜBER DIE EUROPÄISCHE PATENTANMELDUNG NR.

EP 25 17 6347

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2025

| Im Recherchenbericht angeführtes Patentdokument | Datum der Veröffentlichung | Mitglied(er) der Patentfamilie | Datum der Veröffentlichung |
|---|---|---|---|
| | | US 5377044 A | 27-12-1994 |
| DE 102016201068 A1 | 27-07-2017 | CN 106996798 A | 01-08-2017 |
| | | DE 102016201068 A1 | 27-07-2017 |
| | | EP 3199919 A2 | 02-08-2017 |
| | | ES 2696924 T3 | 18-01-2019 |
| | | JP 6753788 B2 | 09-09-2020 |
| | | JP 2017134073 A | 03-08-2017 |
| | | US 2017211951 A1 | 27-07-2017 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1436647 B1

- EP 1762828 A2

**In der Beschreibung aufgeführte Nicht-Patentliteratur**

- **M.V.D.KERKHOF et al.** EUV-induced hydrogen plasma and particle release. *Radiation Effects & Defects in Solids*, 2022, vol. 177 (5-6), 486-512